# EUROPÄISCHE PATENTANMELDUNG

(11) **EP 4 424 615 A1**
(43) Veröffentlichungstag der Anmeldung: **04.09.2024**
(21) Anmeldenummer: 23159434.2
(22) Anmeldetag: 01.03.2023
(51) Int. Cl.: B65G 1/04, B65G 1/137, B65G 47/61, B65G 65/00

(54) **TRANSFERSTATION ZUM BE- ODER ENTLADEN EINES TASCHENSORTERS MIT TRANSPORTTASCHEN UND ENTSPRECHENDES VERFAHREN**

(71) Anmelder: BEUMER Group GmbH & Co. KG, 59269 Beckum (DE)
(72) Erfinder: Sandor, Nicolas, 8583 Edelschrott (AT)
(74) Vertreter: Angerhausen, Christoph

(57) **Zusammenfassung**

Die Erfindung betrifft eine Transferstation zum Be- oder Entladen eines Taschensorters mit Transporttaschen, dadurch gekennzeichnet, dass die Transferstation umfasst: einen mobilen Zwischenspeicher zum Speichern und An- und Abfördern einer Mehrzahl von Transporttaschen, wobei der Zwischenspeicher eine Führungsschiene aufweist, entlang welcher die Transporttaschen durch den Zwischenspeicher bewegbar sind und welche zumindest eine erste Transferseite zur Aufnahme oder Abgabe von Transporttaschen aufweist, ein Transfermodul zum Transferieren der Transporttaschen zwischen dem Zwischenspeicher und einem Taschensorter, mit einem Aufnahmebereich, in welchen der Zwischenspeicher eine Transferposition einnehmend positionierbar ist und in welchen zumindest ein mit einem Taschensorter verbindbarer Führungsschienenabschnitt mündet, wobei die Transferseite der Führungsschiene des Zwischenspeichers und der Führungsschienenabschnitt des Transfermoduls in der Transferposition eine mechanische Schnittstelle ausbilden, über welche die Transporttaschen von dem Zwischenspeicher an das Transfermodul und umgekehrt übergeben werden können. Die Erfindung betrifft ferner ein entsprechendes Verfahren.

## Beschreibung

Die Erfindung betrifft eine Transferstation zum Be- oder Entladen eines Taschensorters mit Transporttaschen und ein entsprechendes Verfahren.

Aus der WO 2022/218480 A1 ist eine Beladestation für einen Hängeförderer zum Transportieren von Transporttaschen mit Fördergut bekannt. Die Transporttaschen werden entlang der Förderstrecke des Hängeförderers quer zur Förderrichtung transportiert und bei Erreichen der Beladestation für den Beladevorgang in eine zweite Ausrichtung längs zur Transportrichtung und verdreht zur ersten Ausrichtung gebracht. In der zweiten Ausrichtung wird eine Beladeöffnung der Transporttasche so aufgehebelt, dass der Beutel aufgespannt ist und die Transporttasche beladen werden kann. Nach Verlassen der Beladestation kehrt die dann befüllte Transporttasche für einen platzsparenden Transport in die erste Ausrichtung zurück. Aus der Druckschrift ist somit das Beladen von bereits auf dem Hängeförderer befindlichen Transporttaschen bekannt.

Ferner ist aus der US 9,169,068 B2 ein Regalbediengerät für ein Hochregallager bekannt. Das Regalbediengerät weist eine mit dem Hochregallager koppelbare Belade-/Entnahmestange auf, über welche Waren von dem Regalbediengerät schwerkraftbedingt gefördert an das Hochregallager transferiert werden können. Aus der EP 1972 577 B1 ist ferner ein Regallager für Hängeware mit einem Regal und einem Regalbediengerät zum Be- und Entladen des Regals bekannt, wobei die Hängeware auf Lagerstangen transportiert wird, welche zwischen dem Regalbediengerät und dem Regal transferierbar sind.

Aus dem Stand der Technik sind jedoch keine Vorrichtung und kein Verfahren zum effizienten Be- oder Entladen eines Taschensorters mit Taschen bekannt, um beispielsweise beladene Taschen für die gesonderte Weiterverarbeitung außerhalb des Sorters aus dem Taschensorter auszusortieren.

Es ist daher die Aufgabe der Erfindung, eine Vorrichtung und ein Verfahren bereitzustellen, mit welchem eine Dezentralisierung von Packplätzen für einen Taschensorters ermöglicht wird bzw. das Beladen eines Taschensorters mit Taschen oder das Entnehmen von Taschen aus einem Taschensorter automatisiert, effizient und mit einem hohen Durchsatz ermöglicht wird, wobei die Taschen vorzugsweise pulkweise aus dem Taschensorter entnommen oder in den Taschensorter geladen werden können.

Die Aufgabe wird gelöst mit den Merkmalen der unabhängigen Ansprüche. Vorteilhafte Ausgestaltungen der Erfindungen sind jeweils in den Unteransprüchen angegeben.

Demgemäß ist vorgesehen, dass die Transferstation umfasst:
Einen mobilen Zwischenspeicher zum Speichern und An- und Abfördern einer Mehrzahl von Transporttaschen, welcher eine Führungsschiene aufweist, entlang welcher die Transporttaschen durch den Zwischenspeicher bewegbar sind und welche zumindest eine erste Transferseite zur Aufnahme oder Abgabe von Transporttaschen aufweist,
ein Transfermodul zum Transferieren der Transporttaschen zwischen dem Zwischenspeicher und einem Taschensorter, mit einem Aufnahmebereich, in welchen der Zwischenspeicher eine Transferposition einnehmend positionierbar ist und in welchen zumindest ein mit einem Taschensorter verbindbarer
Führungsschienenabschnitt mündet,
wobei die Transferseite der Führungsschiene des Zwischenspeichers und der Führungsschienenabschnitt des Transfermoduls in der Transferposition eine mechanische Schnittstelle ausbilden, über welche die Transporttaschen von dem Zwischenspeicher an das Transfermodul und umgekehrt übergeben werden können.

Die Erfindung betrifft demnach eine mit einem Taschensorter koppelbare Transferstation mit einem mobilen Zwischenspeicher zum Aufnehmen und Speichern von Taschen, mittels welchem die Taschen an- bzw. abgefördert bzw. anderweitig transportiert werden können. Der mobile Zwischenspeicher kann beispielsweise ein Aluprofil als Führungsschiene aufweisen. Der mobile Zwischenspeicher kann ein Rahmengestell aufweisen, an welchem die Führungsschiene befestigt ist. Die Führungsschiene kann sich von einer ersten Stirnseite des Rahmengestells zu einer gegenüberliegenden Stirnseite des Rahmengestells erstrecken und beispielsweise jeweils bündig mit diesem abschließen oder einen Überstand gegenüber dem Rahmengestell aufweisen. Das Transfermodul kann mit einem entsprechenden Taschensorter gekoppelt bzw. in diesen integriert sein. Der Führungsschienenabschnitt des Transfermoduls kann dabei auch als vom Taschensorter in das Transfermodul hineinragende Führungsschiene ausgebildet sein. Der Aufnahmebereich kann eine Kavität im Transfermodul sein, in welche zumindest ein Abschnitt der Transferseite des Zwischenspeichers aufgenommen werden kann. Die Transferposition kann sich innerhalb des Aufnahmebereichs befinden und insbesondere den Zustand beschreiben, in welchem der Zwischenspeicher im Transfermodul mittels mechanischer Mittel zentriert und/oder fixiert ist. Beispielsweise für die Dauer des Transports der Taschen kann vorgesehen sein, dass die Taschen mittels einer Blockiereinrichtung unbeweglich im Zwischenspeicher gehalten werden, beispielsweise mittels einer Kette eingefangen werden, damit die Taschen sich nicht bewegen können. Es kann vorgesehen sein, dass die Taschen, mit welchem der Zwischenspeicher beladen ist, jeweils einen Auftrag darstellen, welcher einen Batch zum Anliefern an eine Transferstation umfasst. Es kann ferner eine Mehrzahl Zwischenspeicher vorgesehen sein, von denen jeweils eine erste Anzahl in Verwendung bzw. beladen und auf dem Weg zum oder auf dem Weg weg vom Transfermodul ist, und von denen eine zweite Anzahl nicht in Verwendung ist und beispielsweise zwischengelagert wird. Es kann ferner vorgesehen sein, dass die Zwischenspeicher zunächst zwischengelagert und dann zu einzelnen Verpackplätzen transportiert werden, wo die Zwischenspeicher dann mit Taschen beladen werden können. Dabei kann auf Basis der Ausdehnung der beladenen Taschen / der zu verladenden Produkte eine maximale Batchgröße bestimmt werden, welche der Zwischenspeicher aufnehmen kann, beispielsweise durch Abgleich des im Zwischenspeicher verfügbaren Förderschienenabschnitts. Die in den Zwischenspeicher geladenen Taschen können für einen oder mehrere Aufträge sortiert und damit vorteilhaft für die Packstation sequenziert werden, sodass der Zwischenspeicher die gleiche Funktion wie eine Entladestation verwirklicht.

Es kann vorgesehen sein, dass der Zwischenspeicher und/oder das Transfermodul eine Antriebsvorrichtung aufweisen, mittels welcher der Zwischenspeicher automatisch in den Aufnahmebereich bzw. aus diesem heraus bewegbar ist. Beispielsweise kann der Zwischenspeicher selbstfahrend sein und/oder die Transferstation zumindest ein fahrerloses Transportfahrzeug bzw. ein AGV (automated guided vehicle) aufweisen, mittels welchem der Zwischenspeicher bewegbar und insbesondere in das Transfermodul hinein und wieder herausbewegt wird. Dabei kann vorgesehen sein, dass das fahrerlose Transportfahrzeug zumindest während des Transports mit dem Zwischenspeicher verbunden ist. Der mobile Zwischenspeicher kann mit Rollen bestückt sein und/oder mittels eines AGVs bewegbar ausgebildet sein, sodass der Zwischenspeicher unabhängig verfahrbar, beispielsweise zu unterschiedlichen Entlade-/Beladebereichen bewegbar ist. Alternativ kann das Transfermodul einen Antrieb mit z.B. Reibrädern aufweisen, welcher der Zwischenspeicher automatisch über eine am Zwischenspeicher montierte Einzugsschiene in das Transfermodul reinziehen bzw. aus diesem herausbefördern kann oder umgekehrt. Alternativ kann auch der Zwischenspeicher den Antrieb und das Transfermodul die Einzugsschiene aufweisen. Weiterhin alternativ kann vorgesehen sein, dass der Zwischenspeicher mittels Schwerkraft automatisch in den Aufnahmebereich bzw. aus diesem heraus bewegbar ist.

Es ist denkbar, dass der mobile Zwischenspeicher und/oder das Transfermodul eine Zentriervorrichtung zum Zentrieren des Zwischenspeichers im Aufnahmebereich zum Einnehmen der Transferposition aufweisen. Die Zentriervorrichtung kann eine erste Zentriereinheit aufweisen, welche dazu eingerichtet ist, einen vorgesehenen Abstand zwischen der Führungsschiene des Zwischenspeichers und dem Führungsschienenabschnitt des Transfermoduls einzustellen, und/oder eine zweite Zentriereinheit aufweisen, welche dazu eingerichtet ist, die Führungsschiene des Zwischenspeichers und den Führungsschienenabschnitt des Transfermoduls in Taschenförderrichtung fluchtend auszurichten. Die erste Zentriereinheit kann mehrere an der Oberseite des Zwischenspeichers in einer Reihe quer zur Führungsschiene angeordnete Positionierrollen aufweisen, welche im Zusammenwirken mit einer Positionierschiene des Transfermoduls für eine seitliche Positionierung bezogen auf die Einfahrrichtung des Zwischenspeichers in das Transfermodul sorgen. Die Positionierschiene kann dabei eine Durchgangspassage für die Positionierrollen des Zwischenspeichers ausbilden. Die Durchgangspassage kann dabei an den Einfahr- bzw. Ausfahrbereichen aufgeweitet und zur Mitte des Transfermoduls hin verjüngt sein, so dass der Zwischenspeicher einen gewissen seitlichen Versatz beim Einfahren in das Transfermodul aufweisen kann und im Zuge des Einfahrens bis zur Zielposition ausreichend ausgerichtet ist. Die zweite Zentriereinheit kann zwei Kugelelemente an der Oberseite des Zwischenspeichers aufweisen, welche oberhalb der Führungsschiene mit dieser fluchtend angeordnet sein können. Diese können im Zusammenwirken mit zwei motorisch angetriebenen Zentriervorrichtungen des Transfermoduls für eine Zentrierung des Zwischenspeichers in Einfahrrichtung innerhalb der Aufnahmeposition sorgen bzw. eine fluchtende Ausrichtung der Führungsschiene mit dem zumindest einen Führungsschienenabschnitt bewirken bzw. zum Vermeiden eines Winkelversatz des Zwischenspeichers im Transfermodul dienen. Die zweite Zentriereinheit kann zwei auf gegenüberliegenden Seiten des Transfermoduls angeordnete, motorisch angetriebene schneckenförmige Räder aufweisen, welche jeweils mit einem Kugelelement des Zwischenspeichers zusammenwirken. Das schneckenförmige Rad kann zwei im Querschnitt im Wesentlichen halbkreisförmige Hälften aufweisen, welche jeweils eine gewindeförmige Fläche aufweisen können, die gegenüberliegend aufeinander zu weisen. Die Hälften können einen sich verjüngenden Spalt ausbilden, in welchem das Kugelelement aufgenommen wird, wobei in einer Freigabeposition des schneckenförmigen Rads der Zwischenspeicher quer zu diesem und unterhalb davon in die Aufnahmeposition einfahren kann. In einer Sperrposition, in welcher das Rad mittels des Motors rotiert ist, kann das Kugelelement zwischen die gewindeförmigen Flächen in den sich verjüngenden Spalt eingefahren sein, sodass der Zwischenspeicher in die Mitte des Transfermoduls gedrückt und mittig in diesem ausgerichtet bzw. fixiert werden kann. Dabei kann beispielsweise eine Abweichung von ungefähr +/- 100mm ausgeglichen werden.

Es kann vorgesehen sein, dass die Bewegungsrichtung des Zwischenspeichers in den bzw. aus dem Aufnahmebereich im Wesentlichen senkrecht zu einer Taschenförderrichtung entlang des Führungsprofils bzw. dem Führungsprofilabschnitt ist. Beispielsweise kann der Zwischenspeicher im Wesentlichen in einer waagerechten Richtung zwischen den oder die Führungsschienenabschnitte des Transfermoduls positioniert werden. Alternativ kann das Führungsprofil des Zwischenspeichers in eine vertikalen Richtung zwischen die Führungsschienenabschnitte des Transfermoduls abgesenkt oder angehoben werden. Ferner kann der Aufnahmebereich von gegenüberliegenden Seiten des Transfermoduls zugänglich sein, so dass der Zwischenspeicher an einer ersten Seite des Aufnahmebereichs in diesen hineinbewegt und an der gegenüberliegenden zweiten Seite des Aufnahmebereichs aus diesem herausbewegt werden kann. Selbstverständlich kann die Transferstation alternativ oder zusätzlich auch dazu eingerichtet sein, dass der Zwischenspeicher an derselben Seite des Transfermoduls in dieses hinein- und wieder herausbewegt werden kann. Das Führungsprofil des Zwischenspeichers kann als Gravitationsstrecke ausgebildet sein, so dass die Taschen im Zwischenspeicher ganz nach vorne rollen können bzw. schwerkraftgetrieben vom Zwischenspeicher an das Transfermodul übergeben werden können.

Es kann ferner vorgesehen sein, dass der Zwischenspeicher eine Aufnahmeseite zum Aufnehmen von Transporttaschen und eine gegenüberliegende Abgabeseite zum Abgeben der Transporttaschen aufweist, zwischen welchen sich die Führungsschiene erstreckt, und das Transfermodul entsprechend einen ersten und einen gegenüberliegenden Führungsschienenabschnitt aufweist, wobei in der Transferposition eine erste mechanische Schnittstelle zwischen der Aufnahmeseite und dem ersten Führungsschienenabschnitt und eine zweite mechanische Schnittstelle zwischen der Abgabeseite und dem zweiten Führungsschienenabschnitt ausgebildet sind, wobei über die erste mechanische Schnittstelle Transporttaschen vom Transfermodul an den Zwischenspeicher übergeben und über die zweite mechanische Schnittstelle Transporttaschen vom Zwischenspeicher an das Transfermodul abgegeben werden können. Dabei kann an der ersten mechanischen Schnittstelle ein erster Versatz zwischen dem ersten Führungsschienenabschnitt und dem aufnahmeseitigen Führungsprofil vorgesehen sein und/oder an der zweiten mechanischen Schnittstelle ein zweiter Versatz zwischen dem abgabeseitigen Führungsprofil und dem zweiten Führungsschienenabschnitt vorgesehen sein, wobei die Transporttaschen am ersten und/oder zweiten Versatz in Förderrichtung jeweils eine dem Versatz entsprechende vertikale Distanz abwärts überwinden.

An zumindest einer Transferseite, also aufnahme- und/oder abgabeseitig, des Zwischenspeichers kann eine Verriegelungsmechanik vorgesehen sein, welche zwischen einer Verriegelungsposition, in welcher die Transporttaschen am Verlassen des Zwischenspeichers gehindert sind, und einer Freigabeposition, in welcher die Transporttaschen das Zwischenspeichers verlassen können, verstellbar sein kann. Am Zwischenspeicher kann jeweils am Anfang und am Ende der Führungsschiene bzw. des Aluprofils eine solche Verriegelungsmechanik vorgesehen sein, damit die Taschen nicht aus dem Trolley rausrollen können. Sobald der Zwischenspeicher den Aufnahmebereich erreicht hat, kann ein mechanischer Mechanismus vorgesehen sein, welcher für eine Entriegelung des Verriegelungsmechanismus sorgt. Die Verriegelungsmechanik kann einen sich quer zur Führungsschiene erstreckenden Druckbolzen aufweisen, welcher bei Erreichen der Aufnahmeposition gegen einen mechanischen Druckanschlag fährt, der über einen sich auf der gegenüberliegenden Seite der Führungsschiene erstreckenden Verriegelungshebel einen die Carrier im Bereich der Bügelaufnahme blockierenden Verriegelungsbolzen wegdrückt, welcher dadurch das Entladen der Rollcarrier von der Führungsschiene freigibt. Alternativ kann die Verriegelungsmechanik einen Verriegelungshebel aufweisen, der mit dem Verriegelungsbolzen verbunden ist und in einer nicht verschwenkten Sperrposition den Verriegelungsbolzen die Rollcarrier auf der Führungsschiene blockiert und in einer verschwenkten Freigabeposition den Verriegelungsbolzen aus dem Förderbereich der Rollcarrier herausschwenkt und dadurch die Rollcarrier zum Verlassen des Zwischenspeichers freigibt. Zur Betätigung des Verriegelungshebels kann dieser einen an seiner Oberseite angebrachten kugelförmigen Druckkopf aufweisen, welcher für die Freigabe der Rollcarrier in Richtung des Führungsprofils, gedrückt werden kann. Der Verriegelungshebel kann ein Gelenk aufweisen, um das dieser verschwenkt wird. Der Verriegelungshebel kann ferner eine zwischen Hebel und Führungsschiene montierte Zugfeder aufweisen, welche die Verriegelungsmechanik zurück in die Sperrposition befördert. Zur Betätigung des Verriegelungshebels kann die Verriegelungsmechanik einen mit dem schneckenförmigen Rad über ein Koppelstück gekoppelten Betätigungskeil aufweisen, welcher im Zuge des Zentrierens des Zwischenspeichers im Aufnahmebereich in Richtung des Druckkopfs der Verriegelungsmechanik verschwenkt und mit diesem in Anlage gebracht wird.

Ferner kann vorgesehen sein, dass der Zwischenspeicher oder das Transfermodul einen Antrieb aufweisen, mittels welchem die Transporttaschen von der Führungsschiene des Zwischenspeichers auf den Führungsschienenabschnitt des Transfermoduls oder umgekehrt überführt werden können. Sobald der Zwischenspeicher in das Transfermodul eingesetzt ist, kann beispielsweise eine Kette mit Pins angetrieben werden, um die Taschen aus dem Zwischenspeicher zu schieben und von diesem an den Taschensorter zu übergeben. Gleichzeitig kann vorgesehen sein, dass ein nächster Auftrag, d.h. eine Mehrzahl Transporttaschen, in den Zwischenspeicher einfahren kann, wobei der Pin der Kette dabei physisch den "alten" und den "neuen" Auftrag trennen kann. Der Antrieb kann ein Kettenantrieb zum Herausschieben der Taschen aus dem Zwischenspeicher sein. Die Kette kann als rückensteife Kette ausgeführt sein, so dass die Kette nur in eine seitliche Richtung geknickt werden und geschoben werden kann. Am Anfang der Kette kann ein Mitnehmer montiert sein, welcher die Rollcarrier im Bereich der Bügelaufnahme aus dem Zwischenspeicher schiebt. Der Mitnehmer kann so ausgestaltet sein, dass er zwei unterschiedliche Positionen einnehmen kann, eine erste, in der der Mitnehmer in den Förderweg der Taschen eingreift, und eine zweite, in der der Mitnehmer aus dem Förderweg der Taschen herausgeschwenkt ist. Der Kettenmitnehmer kann dabei so gestaltet sein, dass ein zwischen die Carrier eingreifender Mitnehmerstift in eine Richtung wegschwenken kann. Der an der Kette befestigte Mitnehmerträger kann dazu ein Drehgelenk aufweisen, an welchem der Mitnehmerstift drehbar gelagert befestigt ist. In einer Schubrichtung kann der Mitnehmerstift an einem Förderanschlag des Mitnehmerträgers anliegen, wodurch der Mitnehmerstift senkrecht zum Mitnehmerträger gehalten ist. Bei Richtungsumkehr der Kette kann der Mitnehmerstift gegen einen Einzuganschlag verschwenken, so dass der Mitnehmerstift in einer Einzugrichtung der Kette in Richtung des Mitnehmerträgers aus dem Taschenförderweg herausgeschwenkt ist und an neu in den Zwischenspeicher einfahrenden Rollcarriern vorbeibewegt werden kann. Alternativ oder ergänzend kann zum Trennen mehrerer Aufträge ferner vorgesehen sein, dass mehrere Aufträge in einem Zwischenspeicher gespeichert sind und mit Abstand/Licht oder durch eine sich optisch von den übrigen Taschen abhebende, beispielsweise farblich markierte, Tasche voneinander sichtbar getrennt werden.

Es kann ferner vorgesehen sein, dass das Transfermodul eine der Aufnahmeseite des Zwischenspeichers vorgelagerte Vereinzelungsvorrichtung zum vereinzelten Abgeben von Transporttaschen aufweist.

Die Erfindung betrifft ferner ein Verfahren zum Be- und/oder Entladen eines Taschensorters mit Transporttaschen, insbesondere unter Verwendung einer Transferstation nach einem der Ansprüche 1 bis 12, aufweisend die Schritte:
Positionieren eines an einer Führungsschiene eine erste Mehrzahl Transporttaschen aufweisenden Zwischenspeichers zum Speichern und An- und Abfördern von Transporttaschen in einen Aufnahmebereich eines Transfermoduls,
Überführen des Zwischenspeichers in eine Transferposition durch mechanisches Verbinden zumindest einer Transferseite der Führungsschiene des Zwischenspeichers mit zumindest einem in den Aufnahmebereich mündenden Führungsschienenabschnitt des Transfermoduls;
Übergeben der ersten Mehrzahl Transporttaschen von dem Zwischenspeicher an das Transfermodul zum Transferieren der Transporttaschen an einen Taschensorter.

Das Verfahren kann ferner das Übergeben einer zweiten Mehrzahl Transporttaschen vom Transfermodul an den Zwischenspeicher aufweisen, nach dem die erste Mehrzahl Transporttaschen von dem Zwischenspeicher an das Transfermodul übergeben wurde.

Ferner kann das Verfahren umfassen, dass das Positionieren des Zwischenspeichers in den Aufnahmebereich des Transfermoduls von einer ersten Seite des Transfermoduls aus erfolgt, wobei das Verfahren ferner das Bewegen des Zwischenspeichers aus dem Aufnahmebereich heraus über eine zweite Seite des Transfermoduls umfassen kann, wobei die zweite Seite von der ersten Seite abweicht, beispielsweise der ersten Seite gegenüberliegt.

Die Erfindung betrifft ferner ein Verfahren zum Kommissionieren von Einzelartikeln, mit den Schritten:
Erstellen mindestens eines Auftragsbatches jeweils aufweisend mindestens zwei Artikel / zwei Taschen basierend auf einer Auftragsliste mithilfe einer Steuereinheit;
Übergeben der mindestens zwei Artikel /der mindestens zwei Taschen an einen Taschensorter;
Sortieren und Sequenzieren der mindestens zwei Artikel / der mindestens zwei Taschen des mindestens einen Auftragsbatches in dem Taschensorter;
Fördern des mindestens einen sequenzierten Auftragsbatches zu einer Transferstation gemäß einem der Ansprüche 1 bis 12 und Übergeben des mindestens einen Auftragsbatches an einen in der Transferstation positionierten mobilen Zwischenspeicher.

Das Verfahren kann ferner den Abtransport des Zwischenspeichers zu einem Packplatz oder einem Zwischenpuffer umfassen, sowie die Rückführung des Zwischenspeichers zu der Transferstation. Selbstverständlich kann vorgesehen sein, dass das Verfahren auch in umgekehrter Richtung abläuft. Dabei kann zunächst die Taschenbeladung in einen an einer Beladestation positionierten mobilen Zwischenspeicher erfolgen. Anschließend kann dann der mobile Zwischenspeicher mit den beladenden Taschen zur Transferstation zurückgeführt werden und die Taschen in das System bzw. an den Hängeförderer überführt werden.

Bei dem Verfahren kann ferner eine Mehrzahl Zwischenspeicher vorgesehen sein, wobei zumindest ein Zwischenspeicher vor Bearbeitung in einer Transferstation vor dieser warten kann, bis das Transfermodul frei wird.

Insbesondere kann vorgesehen sein, dass die Transferstation bzw. der mobile Zwischenspeicher gemäß einem der Ansprüche 1 bis 12 ausgebildet ist.

Weitere Einzelheiten der Erfindung werden anhand der nachstehenden Figuren erläutert. Dabei zeigt:
- Figur 1: eine perspektivische Ansicht einer Ausführungsform der erfindungsgemäßen Transferstation;
- Figur 2: eine perspektivische Ansicht einer Ausführungsform des erfindungsgemäßen Taschenzwischenspeichers ;
- Figur 3: eine Detailansicht einer Schnittstelle zwischen einer Führungsschiene eines Zwischenspeichers und einem Führungsschienenabschnitt eines Transfermoduls gemäß einer Ausführungsform der Erfindung;
- Figur 4: eine Detailansicht einer Zentriereinrichtung gemäß einer Ausführungsform der Erfindung;
- Figur 5: eine Detailansicht einer Verriegelungsmechanik gemäß einer ersten Ausführungsform der Erfindung;
- Figur 6: eine Detailansicht einer Verriegelungsmechanik gemäß einer zweiten Ausführungsform der Erfindung;
- Figur 7: eine Detailansicht einer durch eine Zentriereinrichtung betätigte Verriegelungsmechanik gemäß der zweiten Ausführungsform der Erfindung;
- Figur 8: eine Detailansicht eines Kettenpuffers gemäß einer Ausführungsform der Erfindung;
- Fig. 9: eine Detailansicht eines Kettenantriebs zum Herausschieben von Transporttaschen aus einem Zwischenspeicher gemäß einer Ausführungsform der Erfindung;
- Fig. 10: eine Detailansicht eines Mitnehmers des Kettenantriebs zum Herausschieben von Transporttaschen aus einem Zwischenspeicher gemäß einer Ausführungsform der Erfindung;
- Fig. 11: eine Detailansicht eines Mitnehmers des Kettenantriebs zum Herausschieben von Transporttaschen aus einem Zwischenspeicher gemäß einer Ausführungsform der Erfindung;
- Fig. 12: eine perspektivische Ansicht einer weiteren Ausführungsform der erfindungsgemäßen Transferstation;
- Fig. 13: eine beispielhafte Anordnung einer erfindungsgemäßen Transferstation zwischen einem Taschensorter und einer Ladezone.

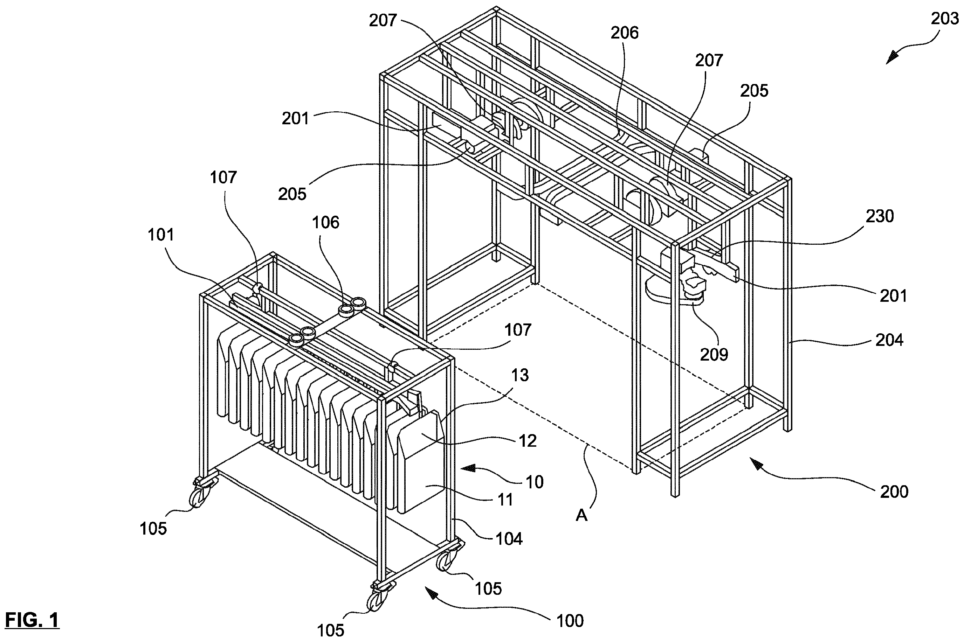

Fig. 1 zeigt eine perspektivische Ansicht einer Ausführungsform der erfindungsgemäßen Transferstation. Diese umfasst zum einen ein mit mehreren Taschen 10 beladenen mobilen Taschenzwischenspeicherioo und zum anderen ein mit einem Taschensorter verbindbares Transfermodul 200. Der Taschenzwischenspeicher 100 weist ein Rahmengestell 104 auf, welches eine Führungsschiene 101 trägt, an welcher eine Mehrzahl Taschen 10 aufgehängt sind, wobei die Taschen 10 in einer Längsrichtung der Führungsschiene 101 entlang dieser bewegbar sind. Das Rahmengestell 104 weist vier Rollen auf, wodurch der Zwischenspeicher 100 frei verfahrbar ist, beispielsweise händisch verschoben oder mittels manuell betriebener oder insbesondere automatischen Flurförderzeugen verfahren werden kann. Die Führungsschiene 101 ist so in dem Rahmengestell 104 angeordnet aufgehängt, dass Taschen 10 über gegenüberliegende Stirnseiten des Zwischenspeichers 100 auf die Führungsschiene 101 geladen und von dieser entladen werden können, wobei jeweils ein offener Endabschnitt der Führungsschiene 101 in eine der Stirnseiten mündet. Dabei ist die Führungsschiene 101 senkrecht zur Bewegungsrichtung des Zwischenspeichers 100 angeordnete, mit welcher dieses in die Aufnahmeposition A im Transfermodul 200 eingefahren wird. Die Taschen 10 weisen jeweils einen Beutel 11 zum Aufnehmen von Ware auf, welche über eine Beladeöffnung 12 des Beutels 11 in diesen geladen werden kann, wobei die Beladeöffnung 12 durch einen Bügel 13 umrandet bzw. begrenzt wird. Der Bügel 13 dient gleichzeitig zum Aufhängen der Taschen 10 an Rollcarriern 20, welche innerhalb der Führungsschiene 101 geführt sind und einen sich nach unten aus der Führungsschiene 101 herauserstreckenden Bügelaufnahmeabschnitt 22 aufweisen, in welchen der Bügel 13 eingehängt ist. Der Zwischenspeicher 100 weist in der gezeigten Ausführungsform ferner an seiner Oberseite mehrere in einer Reihe quer zur Führungsschiene 101 angeordnete Positionierrollen 106 auf, welche im Zusammenwirken mit einer Positionierschiene 206 des Transfermoduls 200 für eine seitliche Positionierung bezogen auf die Einfahrrichtung des Zwischenspeichers 100 in das Transfermodul 200 sorgen. Der Zwischenspeicher weist ferner zwei Kugelelemente 107 auf, welche oberhalb der Führungsschiene 101 mit dieser fluchtend angeordnet sind. Diese dienen im Zusammenwirken mit zwei Zentriervorrichtungen 207 des Transfermoduls 200 für eine Zentrierung des Zwischenspeichers 100 in Einfahrrichtung innerhalb der Aufnahmeposition A.

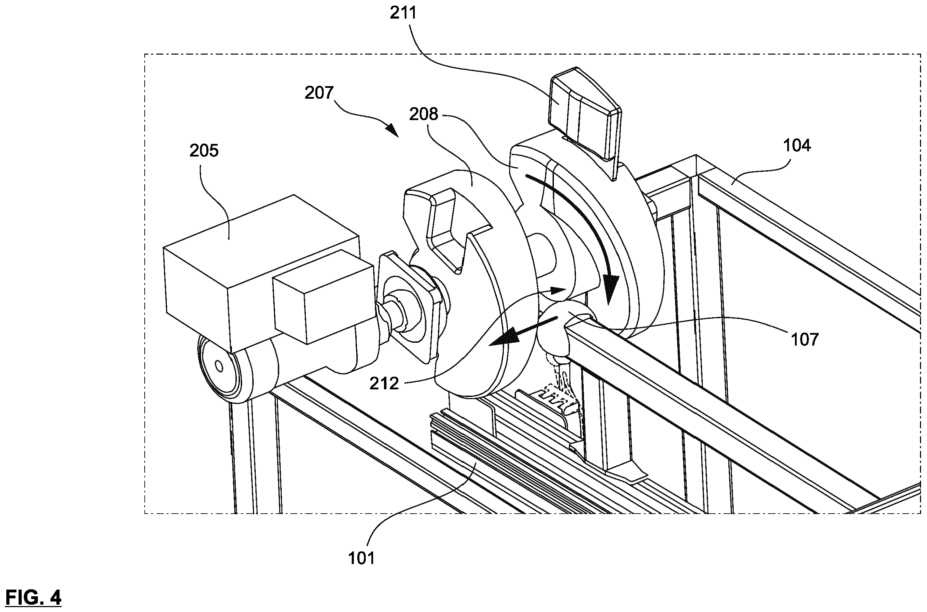

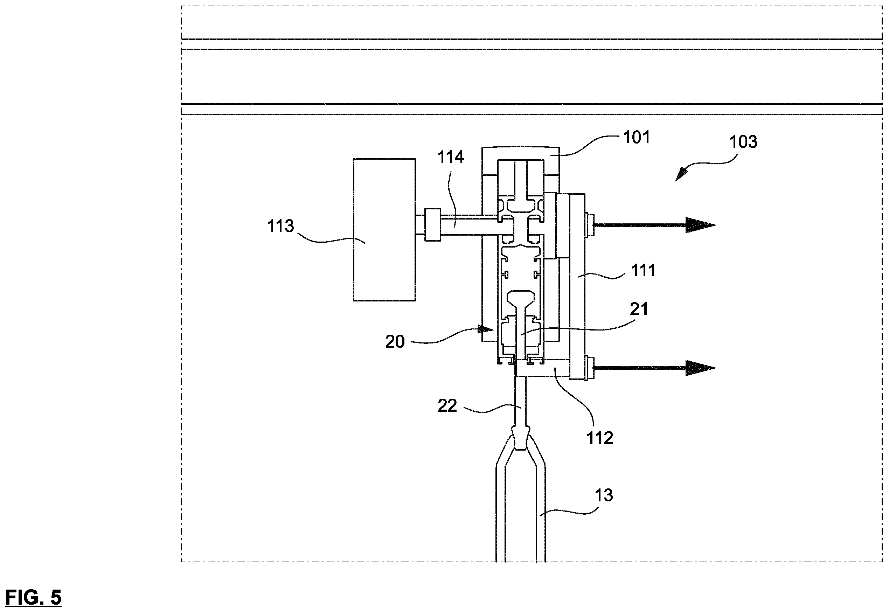

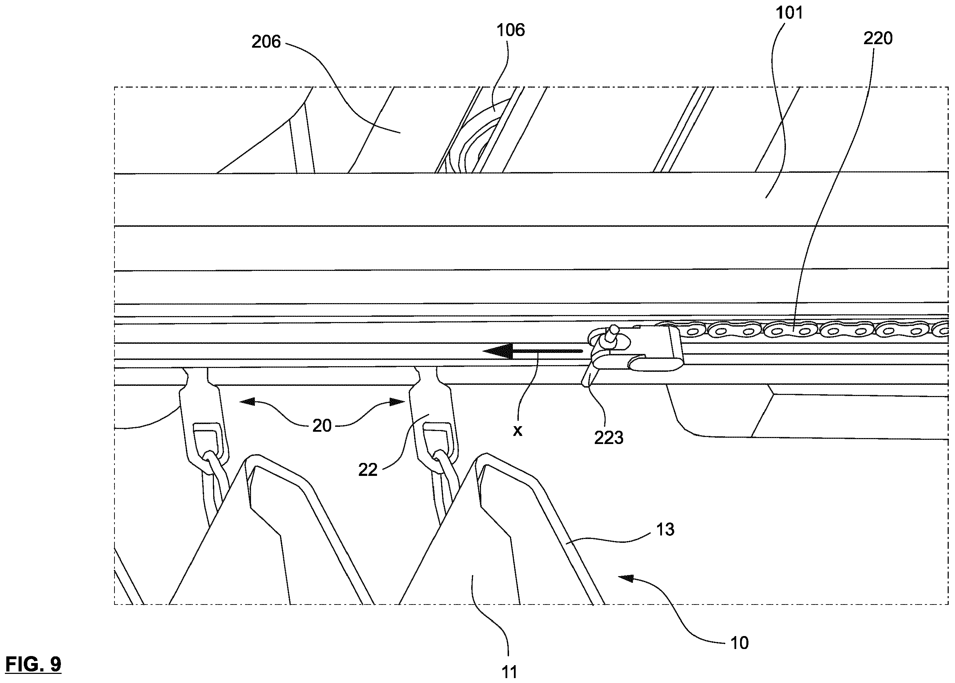

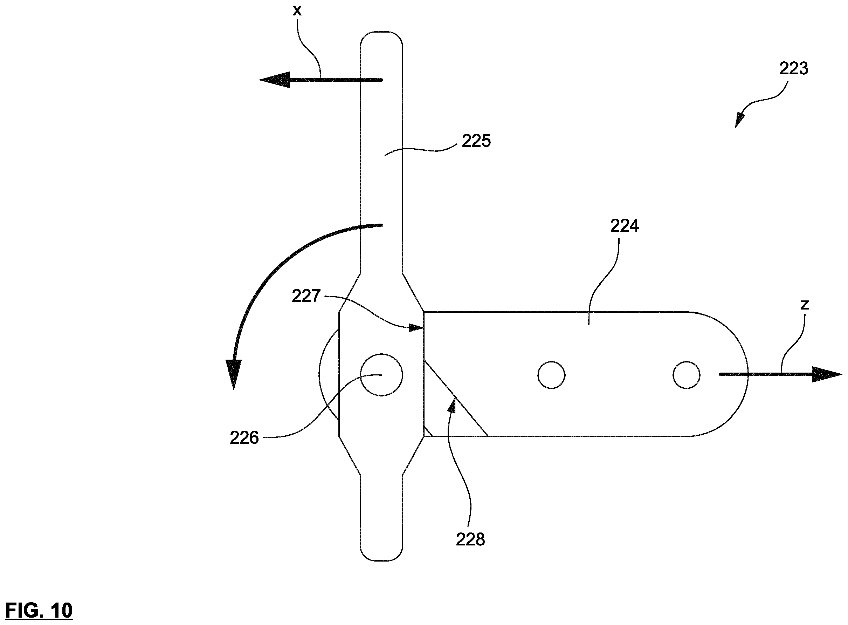

Das fest installierte Transfermodul 200, beispielweise als fest installierte Schnittstelle innerhalb eines Taschensorters für die Be- und Entladung des Taschensorters mit Transporttaschen 10, weist ebenfalls ein Rahmengestell 204 auf, über welches das Transfermodul 200 mittels Füßen auf dem Boden abgestützt ist. Das Transfermodul 200 ist portalartig ausgeführt, so dass der mobile Zwischenspeicher 100 von einer ersten Seite in das Transfermodul 200 einfahren und an der gegenüberliegenden Seite aus diesem herausfahren kann. Der portalartige Durchgang, der durch das Transfermodul 200 bereitgestellt ist, bildet die Aufnahmeposition A, welche derart bemessen ist, dass sie zur Aufnahme des Taschenzwischenspeichers 100 ausgebildet ist. Das Transfermodul 200 weist im Wesentlichen zwei gegenüberliegende Führungsschienenabschnitte 201 auf, welche bei in das Transfermodul 200 eingefahrenem Zwischenspeicher 100 jeweils eine mechanische Schnittstelle mit den jeweiligen Endabschnitten der Führungsschiene 101 des Zwischenspeichers ausbilden, so dass ein Transfer von Taschen 10 über beide Schnittstellen ermöglicht ist. Weiterhin weist das Transfermodul 200 die bereits erwähnte Positionierschiene 206 auf, welche für eine seitliche Zentrierung des Zwischenspeichers 100 in der Aufnahmeposition A dient. Die Positionierschiene 206 bildet dabei eine Durchgangspassage für die Positionierrollen 106 des Zwischenspeichers 100. Die Durchgangspassage ist dabei an den Einfahr- bzw. Ausfahrbereichen aufgeweitet und verjüngt sich zur Mitte des Transfermoduls 200 hin, so dass der Zwischenspeicher 100 einen gewissen seitlichen Versatz beim Einfahren in das Transfermodul 200 aufweisen kann und im Zuge des Einfahrens bis zur Zielposition ausreichend ausgerichtet ist. Ferner weist das Transfermodul 200 zwei über jeweilige Motoren 205 angetriebene Zentriervorrichtungen 207 auf, welche im Zusammenwirken mit den Kugelelementen 107 des Zwischenspeichers 100 eine Zentrierung des Zwischenspeichers 100 in Einfahrrichtung bzw. eine fluchtende Ausrichtung der Führungsschiene 101 mit den Führungsschienenabschnitten 201 bewirken. Die Funktionsweise der Zentriervorrichtungen 207 ist in Fig. 4 gezeigt und wird im entsprechenden Beschreibungsabsatz im Detail erläutert. Sobald der Zwischenspeicher 100 in der Aufnahmeposition A zentriert und fixiert ist, wird eine in den Figuren 5 bis 7 gezeigte Verriegelungsmechanik 103 geöffnet, welche die geladenen Taschen 10 im Zwischenspeicher 100 fixieren, so dass die geladenen Taschen 10 mittels einer motorbetriebenen Antriebskette 220, im Detail gezeigt in den Figuren 9 und 10, über eine der Schnittstellen aus dem Zwischenspeicher 100 auf das Transfermodul 200 geschoben werden können und eine weitere Mehrzahl Taschen 10 vom Taschensorter über das Transfermodul 200 und über die andere der Schnittstellen in den Zwischenspeicher 100 einströmen können. Das Beladen des Zwischenspeichers 100 kann mittels einer Vereinzelungsvorrichtung 230 reguliert werden, so dass die Anzahl der in den Zwischenspeicher 100 einströmenden Taschen 10 genau determiniert werden kann.

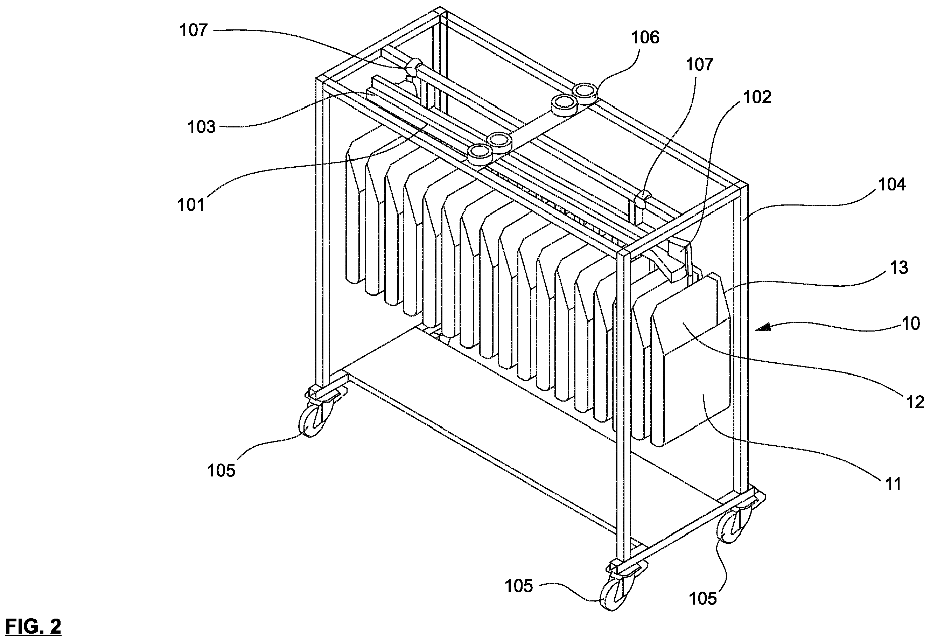

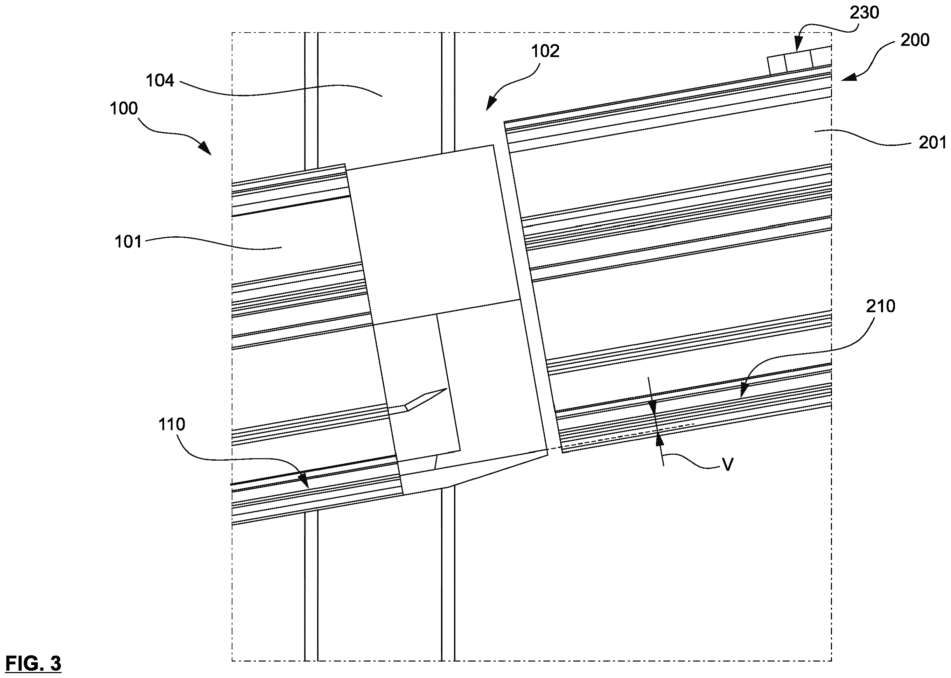

Fig. 2 zeigt eine vergrößerte Ansicht des Zwischenspeichers 100 gemäß der in Fig. 1 gezeigten Ausführungsform. Gut zu erkennen sind die in einer Reihe angeordneten Positionierrollen 106. Diese können sich frei drehen und weisen zumindest an ihrer Außenseite aus einem elastischen Material gebildete Rollreifen auf, welche Stöße dämpfen und ein geräuscharmes Einfahren des Zwischenspeichers 100 in das Transfermodul 200 ermöglichen. Ferner ist zu erkennen, dass die Kugelelemente 107 zum Zentrieren bzw. Fixieren des Zwischenspeichers 100 in der Aufnahmeposition A an derselben Strebe des Rahmengestells 104 befestigt sind, an welcher die Führungsschiene 101 aufgehängt ist. Ferner ist zu erkennen, dass die Führungsschiene 101 eine Aufnahmeseite 102 und eine Abgabeseite 103 aufweist. Die Aufnahmeseite 102 dient für das Beladen des Zwischenspeichers 100 mit Taschen 10, die Abgabeseite 103 zum Abgeben der Taschen 10. Aufnahmeseitig weist die Führungsschiene 101 einen nach oben abgewinkelten Abschnitt auf, vgl. Fig. 3, welcher dazu dient, dass Taschen 10 ohne Antrieb schwerkraftgetrieben in den Zwischenspeicher 100 einfahren können. Demgegenüber ist die Abgabeseite 103 gerade ausgebildet, da hier die Taschen 10 mittels des Kettenantriebs 209 aus dem Zwischenspeicher 100 herausgeschoben werden. Die unterschiedliche Ausgestaltung der Enden der Führungsschiene 101 impliziert, dass der Zwischenspeicher 100 immer in einer vorbestimmten Ausrichtung in das Transfermodul 200 eingefahren werden muss.

Fig. 3 zeigt eine Detailansicht der Schnittstelle zwischen der Aufnahmeseite 102 des Zwischenspeichers 100 und dem komplementären Führungsschienenabschnitt 201 des Transfermoduls 200, welcher eine Staustrecke mit einem der Aufnahmeseite 102 entsprechenden Gefälle und der Vereinzelungsvorrichtung 230 aufweist, über welches Taschen 10 antriebslos vom Transfermodul 200 an den Zwischenspeicher übergeben werden können. Dabei ist ein Versatz V vorgesehen, welchen die Aufnahmeseite 102 gegenüber dem angrenzenden Führungsschienenabschnitt 201 aufweist, bzw. welchen die Aufnahmeseite 102 unterhalb des Führungsschienenabschnitts 201 angeordnet ist. Dadurch ist sichergestellt, dass die Taschen beim Beladen auch bei Unebenheiten des Bodens, bzw. zum Ausgleichen von Toleranzen des Zwischenspeichesr, immer vom Transfermodul 200 an den Zwischenspeicher 100 abgegeben werden können. Anders ausgedrückt ist nach dem Wasserfallprinzip beim Übergang vom Transfermodul 300 auf den Zwischenspeicher 100 ein negativer Stoß vorgesehen. Ein entsprechender, nicht dargestellter Versatz ist ferner abgabeseitig vom Zwischenspeicher 100 auf das Transfermodul 102 vorgesehen. Ein Vorteil ist dabei, dass auf mechanische Führungen zum Ausrichten der Höhen verzichtet werden kann.

Fig. 4 zeigt eine Detailansicht der Zentriervorrichtung 203, welche zum Zentrieren des Zwischenspeichers 100 in Einfahrrichtung bzw. zum Vermeiden eines Winkelversatz des Zwischenspeichers 100 im Transfermodul 200 eingesetzt wird. Diese und eine entsprechende Vorrichtung auf der gegenüberliegenden Seite des Transfermoduls 200 weist ein durch einen Motor 205 angetriebenes schneckenförmiges Rad 207 auf, welches mit dem Kugelelement 107 des Zwischenspeichers 100 zusammenwirkt. Das schneckenförmige Rad 207 weist zwei im Querschnitt im Wesentlichen halbkreisförmige Hälften auf, welche jeweils eine gewindeförmige Fläche 208 aufweisen, die gegenüberliegend aufeinander zu weisen. Die Hälften bilden einen sich verjüngenden Spalt 212 aus, in welchem das Kugelelement 107 aufgenommen wird. In einer Freigabeposition des schneckenförmigen Rads 207 kann der Zwischenspeicher 100quer zu diesem und unterhalb davon in die Aufnahmeposition A einfahren. Dann wird das Rad 207 mittels des Motors 205 rotiert, so dass das Kugelelement 107 zwischen die gewindeförmigen Flächen 208 in den sich verjüngenden Spalt 212 einfährt, sodass der Zwischenspeicher 100 in die Mitte des Transfermoduls 200 gedrückt und mittig in diesem ausgerichtet bzw. fixiert wird. Dabei kann beispielsweise eine Abweichung, z.B. wenn der Zwischenspeicher 100 nicht ganz in das Transfermodul 200 geschoben wurde) von ungefähr +/- 100mm ausgeglichen werden.

Fig. 5 zeigt eine Detailansicht der Verriegelungsmechanik 103 gemäß einer ersten Ausführungsform der Erfindung, welche jeweils am Anfang und am Ende der Führungsschiene 101 angeordnet ist, damit die Taschen nicht aus dem Zwischenspeicher 100 rausrollen können. Wird der Zwischenspeicher 100 in das Transfermodul 200 überführt, trifft diese Verriegelungsmechanik 103 bei Erreichen der Aufnahmeposition A mit einem sich quer zur Führungsschiene 101 erstreckenden Druckbolzen 114 gegen einen mechanischen Druckanschlag 113, der über einen sich auf der gegenüberliegenden Seite der Führungsschiene 101 erstreckenden Verriegelungshebel 111 einen die Carrier 20 im Bereich der Bügelaufnahme 22 blockierenden Verriegelungsbolzen 112 wegdrückt, welcher dadurch das Entladen der Rollcarrier 20 von der Führungsschiene 101 freigibt.

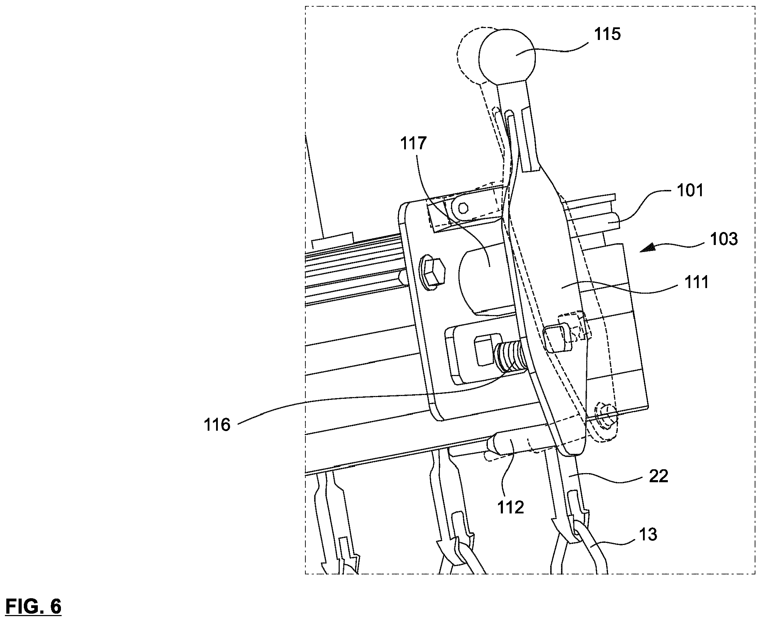

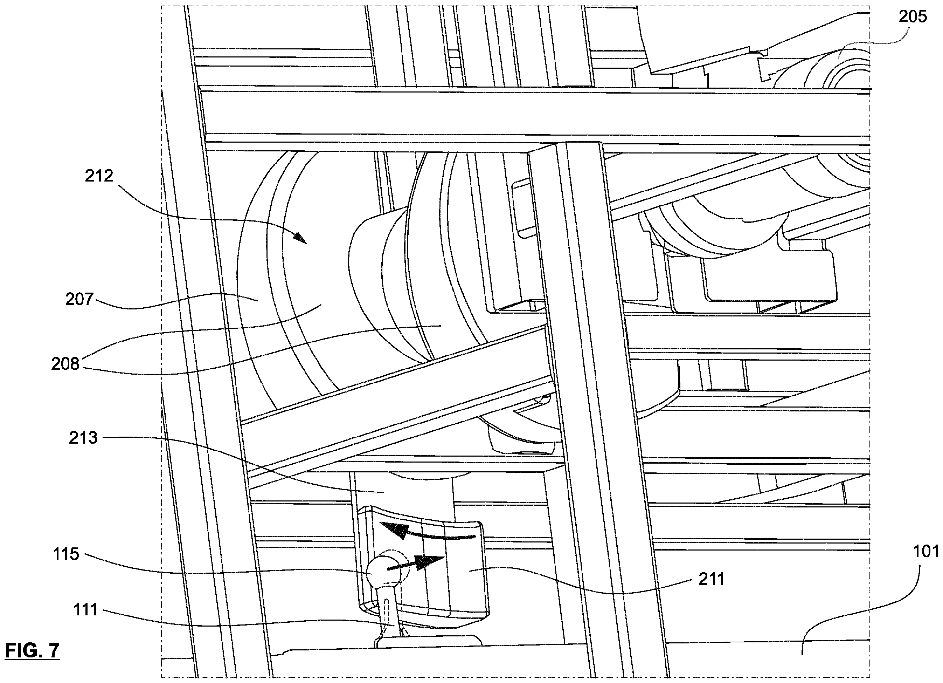

Die Figuren 6 und 7 zeigen eine alternative Ausführungsform der Verriegelungsmechanik 103, welche wiederum aufnahme- und abgabeseitig an der Führungsschiene 101 des Zwischenspeichers montiert ist. Diese weist ebenfalls einen zwischen die Rollcarrier 20 eingreifenden Verriegelungsbolzen 112 zum Sperren der Rollcarrier 20 auf der Führungsschiene 101 auf. Ferner ist ebenfalls ein sich seitlich des Führungsprofils und im Wesentlichen vertikal erstreckender Verriegelungshebel 111 vorgesehen, der mit dem Verriegelungsbolzen 112 verbunden ist und in einer nicht verschwenkten Sperrposition den Verriegelungsbolzen 112 die Rollcarrier 20 auf der Führungsschiene 101 blockiert und in einer verschwenkten Freigabeposition den Verriegelungsbolzen 112 aus dem Förderbereich der Rollcarrier 20 herausschwenkt und dadurch die Rollcarrier 20 zum Verlassen des Zwischenspeichers 100 freigibt. Die Betätigung des Verriegelungshebels 111 erfolgt bei der gezeigten Ausführungsform über einen an seiner Oberseite angebrachten kugelförmigen Druckkopf 115, welcher für die Freigabe der Rollcarrier 20 in Richtung des Führungsprofils 101, das heißt, entgegen der daraus resultierenden Bewegungsrichtung des Verriegelungsbolzens 112, gedrückt wird. Dadurch wird der Verriegelungshebel 111 um ein Gelenk 117 verschwenkt und der Verriegelungsbolzen 112 aus dem Förderbereich herausgeschwenkt. Bei Wegnahme der Druckkraft auf den Druckkopf 115, schwenkt der Verriegelungshebel 111 aufgrund der Rückstellkraft einer zwischen Hebel 111 und Führungsprofil montierten Zugfeder zurück in die Sperrposition. Figur 7 zeigt die Funktionsweise der Betätigung der Verriegelungsmechanik 103 gemäß Figur 6 und 7. Die Betätigung des Verriegelungshebels 111 erfolgt über einen mit dem schneckenförmigen Rad 207 über ein Koppelstück 213 gekoppelten Betätigungskeil 211. Im Zuge des Zentrierens des mobilen Zwischenspeichers 100 im Aufnahmebereich A wird, bei dem das schneckenförmige Rad 207 rotiert wird, wird der Betätigungskeil 211 in Richtung des Druckkopfs 115 der Verriegelungsmechanik 103 verschwenkt und mit diesem in Anlage gebracht. Durch die Keilform des Betätigungskeils 211 wird der Druckkopf im Zuge des Verschwenkens sukzessive aus seiner Sperrposition herausgedrückt, so dass in der Endposition des Betätigungskeils 211 die Freigabe der Rollcarrier 20 aus dem Zwischenspeicher 100 erfolgt. Fig. 7 zeigt zum einen die Bewegungsrichtung des Betätigungskeils 211 und die daraus resultierende Bewegungsrichtung des Druckkopfs 115 bzw. des damit gekoppelten Verriegelungshebels 111. Die Anordnung weist den Vorteil auf, dass eine Freigabe der Rollcarrier 20 erst nach abgeschlossener Zentrierung bzw. Fixierung des Zwischenspeichers 100 im Aufnahmebereich A erfolgt und hierzu keine zusätzliche Sensorik mit zugehöriger Steuerungselektronik notwendig ist. Der Unterschied zwischen den Ausführungsformen der Figur 5 und der der Figuren 6 und 7 besteht somit zum einen in der Bewegung des Verriegelungshebels 111 und zum anderen in der Ursache der Betätigung. In der Ausführungsform gemäß Figur 5 ist die Bewegungsrichtung des Verriegelungshebels 111 linear quer zur Führungsschiene 101 und die Betätigung wird durch die Bewegung des Zwischenspeichers 100 in den Aufnahmebereich A hinein bewirkt. In der Ausführungsform gemäß Figur 6 und 7 ist die Bewegungsrichtung des Verriegelungshebels 111 demgegenüber eine Schwenkbewegung um das Gelenk 117 herum und die Betätigung wird über einen motorisch angetriebenen Betätigungskeil 211 bewirkt.

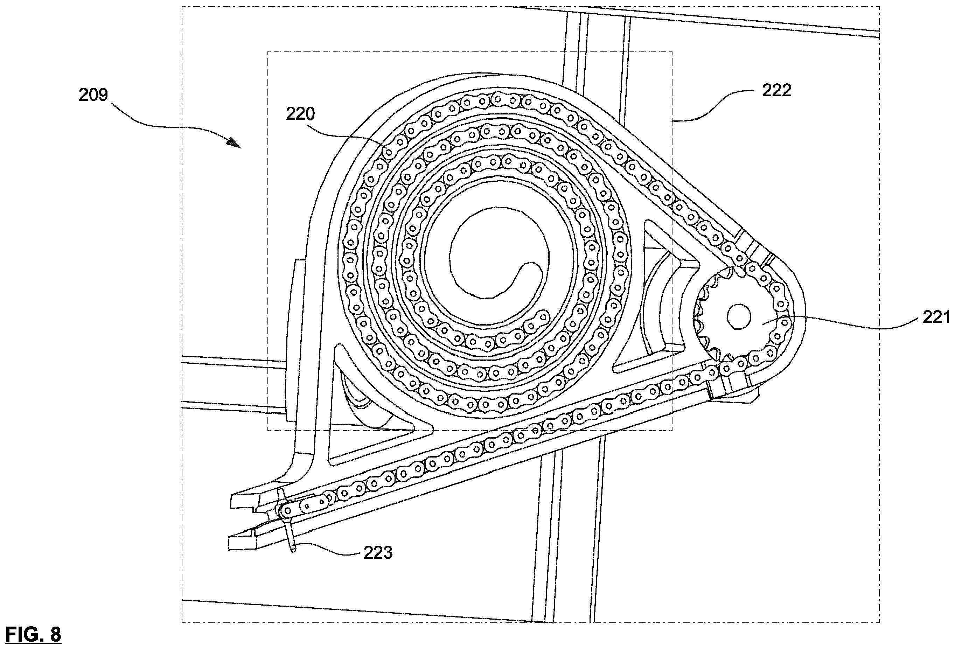

Die Figuren 8 und 9 zeigen Ansichten des Kettenantriebs 220 zum Herausschieben der Taschen 10 aus dem Zwischenspeicher 100. Die Kette 220 ist als rückensteife Kette ausgeführt, so dass die Kette 220 nur in eine seitliche Richtung geknickt werden kann. Der Vorteil besteht dabei darin, dass die Kette 220 geschoben werden kann. Am Anfang der Kette 220 ist ein Mitnehmer 223 montiert, welcher die Rollcarrier 20 im Bereich der Bügelaufnahme 22 aus dem Zwischenspeicher 100 schiebt. Um die Taschen 10 aus dem Zwischenspeicher 100 zu schieben, wird die Kette 220 mittels eines Antriebsrads 221 aus dem Kettenpuffer 222 geschoben. Im runden Kettenpuffer 222 wird die Kette 220 schneckenförmig eingezogen. Nach erfolgtem Herausschieben wird die Kette 220 wieder zurück in den Kettenpuffer 222 eingezogen. Figur 9 zeigt exemplarisch den Vorgang des Herausschiebens der an der Führungsschiene 101 aufgehängten Taschen 10 aus dem Zwischenspeicher 100. An den in der Positionierschiene 206 befindlichen Positionierrollen 106 ist zu erkennen, dass sich das Zwischenspeicher 100 im Aufnahmebereich A befindet und seine Transferposition eingenommen hat, so dass eine Übergabe der Taschen 10 vom Zwischenspeicher 100 an das Transfermodul 200 erfolgen kann. Sobald die Verriegelungsmechanik 103 das Entladen der Taschen 10 freigibt, wird mittels des Antriebsrads 221 die Kette 220 aus dem Kettenpuffer 222 geschoben, so dass sich der an der Spitze der Kette 220 befestigte Mitnehmer 223 parallel zur Förderrichtung X bewegt, wobei der sich der Mitnehmer 223 quer zur Förderrichtung X erstreckend in den Förderweg der Taschen 10 hineinerstreckt und diese somit im Zuge des Herausschiebens der Kette 220 mitnimmt und aus dem Zwischenspeicher 100 herausschiebt. Die Kette 220 ist dabei so neben der Führungsschiene 101 angeordnet, dass der Mitnehmer 223 zwischen der Aufnahmeseite 102 und der Abgabeseite 103 verfahren werden kann und in diesem Bereich in den Taschenförderweg eingreift.

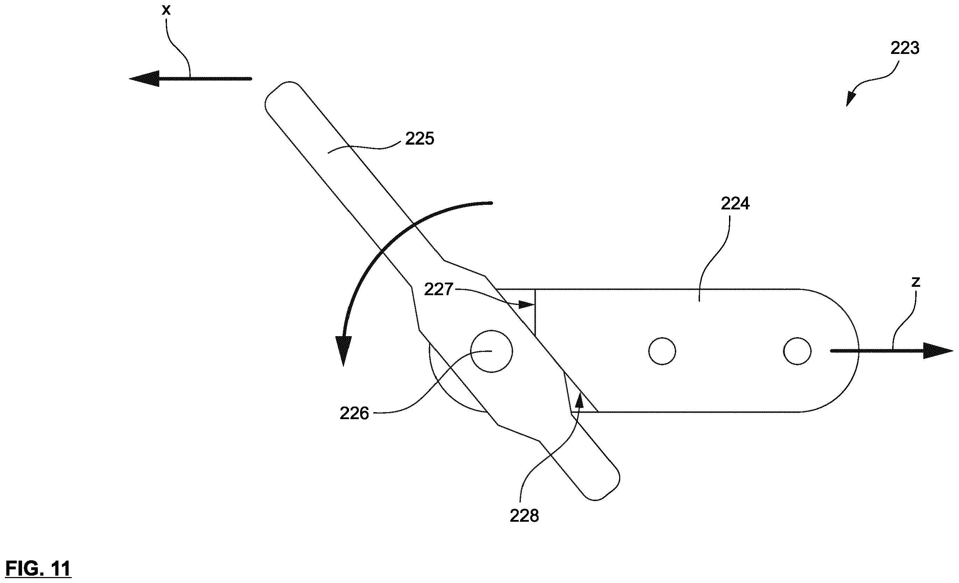

Die Figuren 10 und 11 zeigen eine Ausführungsform des Mitnehmers 223. Dieser ist so ausgestaltet, dass er zwei unterschiedliche Positionen einnehmen kann, eine erste, gezeigt in Figur 10, in der der Mitnehmer 223 in den Förderweg der Taschen 10 eingreift, und eine zweite, gezeigt in Figur 11, in der der Mitnehmer 223 aus dem Förderweg der Taschen 10 herausgeschwenkt ist. Der Kettenmitnehmer 223 ist dabei so gestaltet, dass der Mitnehmerstift 225 in eine Richtung wegschwenken kann. Der an der Kette 220 befestigte Mitnehmerträger 224 weist dazu ein Drehgelenk 226 auf, an welchem der Mitnehmerstift 225 drehbar gelagert befestigt ist. In einer Schubrichtung X liegt der Mitnehmerstift 225 dabei an einem Förderanschlag 227 des Mitnehmerträgers 224 an, wodurch der Mitnehmerstift 225 senkrecht zum Mitnehmerträger 224 gehalten ist. Bei Richtungsumkehr der Kette 220 verschwenkt der Mitnehmerstift 225 gegen einen Einzuganschlag 228, so dass der Mitnehmerstift 225 in einer Einzugrichtung Z der Kette 22oin Richtung des Mitnehmerträgers 224 aus dem Taschenförderweg herausgeschwenkt ist und an neu in den Zwischenspeicher 100 einfahrenden Rollcarriern 20 vorbeibewegt werden kann. Der Vorteil dabei besteht darin, dass beim Zurückfahren der Kette 220 in den Kettenpuffer 222 währenddessen wieder neue Taschen 10 in den Zwischenspeicher 100 vereinzelt werden können und somit ein höherer Durchsatz erzielbar ist.

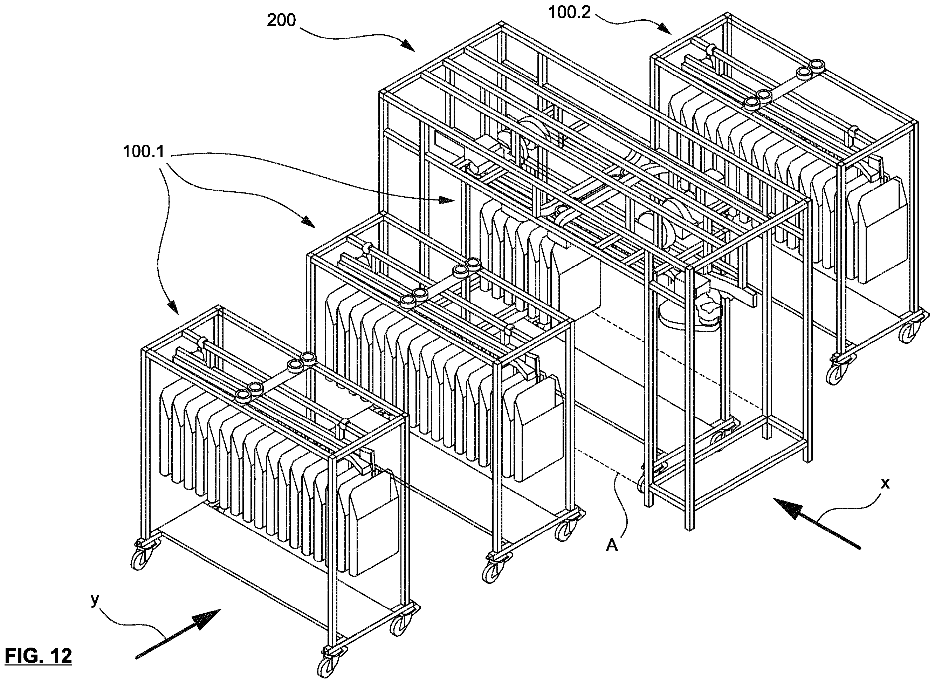

Figur 12 zeigt eine perspektivische Ansicht einer Ausführungsform der erfindungsgemäßen Transferstation. Diese zeigt ein Transfermodul 200 mit einem gerade in dessen Aufnahmebereich A befindlichen Taschenzwischenspeicher 100.1, das sich in einem Entladevorgang befindet, bei welchem die Taschen in Förderrichtung X aus dem Zwischenspeicher 100 geschoben werden. Vor dem Transfermodul 200 warten zwei weitere zu entladende Zwischenspeicher 100.1, hinter dem Zwischenspeicher ist ein bereits entladener und wieder beladener Zwischenspeicher 100.2 zu erkennen, der das Transfermodul 200 bereits wieder verlassen hat. Wie zu sehen ist, werden die Zwischenspeicher 100alle in derselben Zwischenspeicherbewegungsrichtung Y in das Transfermodul 200 hinein- und danach auch gleichbleibend in derselben Richtung Y aus diesem herausgefahren. Ermöglicht wird dies durch den portalartigen Aufbau des Transfermoduls 200, wodurch dieses von zwei Seiten zugänglich ist und von den Zwischenspeichern durchfahren werden kann.

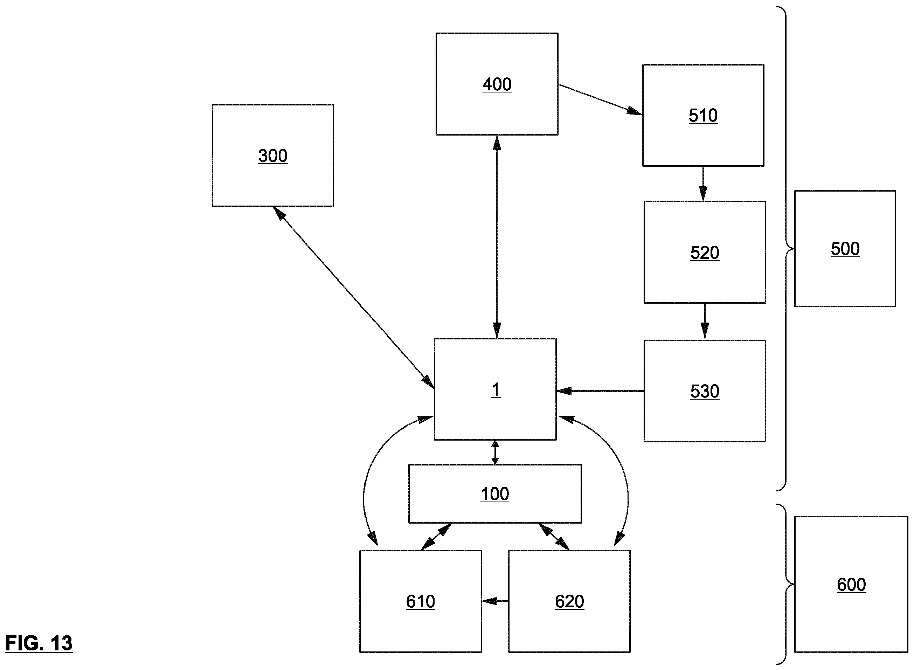

Fig. 13 zeigt beispielhaft eine Integration einer erfindungsgemäßen Transferstation 1 zwischen einen Taschensorter 500, eine räumlich vom Taschensorter getrennte Ladezone 600, ein Artikellager 400 und einem Leertaschenspeicher 300. Durch die räumliche Trennung kann ein dezentrales Packen bzw. Beladen erfolgen. Der Taschensorter 500 umfasst einen Auftragszwischenspeicher 510, eine Einrichtung zum Sortieren von Aufträgen 520 sowie eine Einrichtung zum Sequenzieren von Aufträgen 530 auf. Die Ladezone 600 umfasst einen Beladeplatz 610 und einen Packplatz 620. Das Transfermodul 200 der Transferstation 1 ist fördertechnisch mit einem Leertaschenspeicher 300, dem Artikellager 400 und mit dem Taschensorter 500 gekoppelt. Der mobile Zwischenspeicher 100 der Transferstation ist fördertechnisch mit dem Transfermodul 200 sowie mit dem Beladeplatz 610 als auch dem Packplatz 620 der Ladezone 600 gekoppelt. Der Funktionsablauf der gezeigten Anordnung wird nachfolgend beschrieben. Zunächst erfolgt das Beladen eines im Transfermodul 200 befindlichen mobilen Zwischenspeichers 100 mit leeren Transporttaschen aus dem Leertaschenspeicher 300. Anschließend fährt der mobile Zwischenspeicher 100 aus dem Transfermodul 200 zum Beladeplatz 620, an welchem das Beladen der einzelnen Transporttaschen mit Artikeln erfolgt. Vom Beladeplatz fährt der nun mit Taschen beladene mobile Zwischenspeicher 100 zurück zum Transfermodul 200, an welches die Taschen übergeben werden und zunächst an das fördertechnisch mit der Transferstation 1 verbundene Artikellager 400 weitergeleitet, welches dem Taschensorter 500 vorgeschaltet ist. Aus dem Artikellager 400 werden die Taschen an den Taschensorter 500 übergeben und dort zunächst in einem Auftragszwischenspeicher 510 gepuffert, bevor deren Sortierung 520 und deren Sequenzierung 530 erfolgt. Anschließend erfolgt die erneute Übergabe eines nun mehrere sortierte und sequenzierte Taschen aufweisenden Auftrags vom Taschensorter 500 an einen mobilen Zwischenspeicher 100 mittels des Transfermoduls 200. Schließlich fährt der mobile Zwischenspeicher 100 einen Packplatz 620, an welchem die Artikel aus den Taschen entladen und verpackt werden. Der nun leere Taschen aufweisende mobile Zwischenspeicher 100 wird nun erneut an den Beladeplatz 610 verfahren, an welchem eine erneute Beladung der Taschen mit Artikeln erfolgt.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: Transferstation
- 10: Transporttasche
- 11: Beutel
- 12: Beladeöffnung
- 13: Bügel
- 20: Rollcarrier
- 21: Rollabschnitt
- 22: Bügelaufnahme
- 100: mobiler Zwischenspeicher
- 101: Führungsschiene
- 102: Aufnahmeseite
- 103: Abgabeseite
- 104: Rahmengestell
- 105: Rollen
- 106: Positionierrollen
- 107: Kugelelement
- 110: Lauffläche Führungsschiene
- 111: Verriegelungshebel
- 112: Verriegelungsbolzen
- 113: Druckanschlag
- 114: Druckbolzen
- 115: Druckkopf
- 116: Feder
- 117: Lagerung
- 200: Transfermodul
- 201: Führungsschienenabschnitt
- 202: Aufnahmebereich
- 203: Zentriervorrichtung
- 204: Rahmengestell
- 205: Motor
- 206: Positionierschiene
- 207: schneckenförmiges Rad
- 208: gewindeförmige Fläche
- 209: Kettenantrieb
- 210: Lauffläche Führungsschienenabschnitt
- 211: Betätigungskeil
- 212: sich verjüngender Spalt
- 213: Koppelstück
- 220: Kette
- 221: Antriebsrad
- 222: Kettenpuffer
- 223: Mitnehmer
- 224: Mitnehmerträger
- 225: Mitnehmerstift
- 226: Drehgelenk
- 227: Förderanschlag
- 228: Einzuganschlag
- 230: Vereinzelungsvorrichtung
- 300: Leertaschenspeicher
- 400: Artikellager
- 500: Taschensorter
- 510: Auftragszwischenspeicher
- 520: Sortieren der Aufträge
- 530: Sequenzierung der Aufträge
- 600: Ladezone
- 610: Beladeplatz
- 620: Packplatz
- A: Aufnahmebereich
- V: Versatz
- X: Taschenförderrichtung
- Y: Zwischenspeicherbewegungsrichtung
- Z: Ketteneinzugsrichtung

## Patentansprüche

1. Transferstation zum Be- oder Entladen eines Taschensorters mit Transporttaschen (10), **dadurch gekennzeichnet, dass** die Transferstation umfasst:
Einen mobilen Zwischenspeicher (100) zum Speichern und An- und Abfördern einer Mehrzahl von Transporttaschen (10), wobei der mobile Zwischenspeicher (100) eine Führungsschiene (101) aufweist, entlang welcher die Transporttaschen (10) durch den mobilen Zwischenspeicher (100) bewegbar sind und welche zumindest eine erste Transferseite (102, 103) zur Aufnahme oder Abgabe von Transporttaschen (10) aufweist,
ein Transfermodul (200) zum Transferieren der Transporttaschen (10) zwischen dem mobilen Zwischenspeicher (100) und einem Taschensorter, mit einem Aufnahmebereich (A), in welchem der mobile Zwischenspeicher (100) eine Transferposition einnehmend positionierbar ist und in welchen zumindest ein mit einem Taschensorter verbindbarer Führungsschienenabschnitt (201) mündet,
wobei die Transferseite (102, 103) der Führungsschiene (101) des mobilen Zwischenspeichers (100) und der Führungsschienenabschnitt (201) des Transfermoduls (200) in der Transferposition eine mechanische Schnittstelle ausbilden, über welche die Transporttaschen (10) von dem mobilen Zwischenspeicher (100) an das Transfermodul (200) und umgekehrt übergeben werden können.

2. Transferstation nach Anspruch 1, wobei der Zwischenspeicher (100) und/oder das Transfermodul (200) eine Antriebsvorrichtung aufweisen, mittels welcher der Zwischenspeicher (100) automatisch in den Aufnahmebereich (A) bzw. aus diesem heraus bewegbar ist.

3. Transferstation nach einem der Ansprüche 1 oder 2, wobei der mobile Zwischenspeicher (100) selbstfahrend ist oder die Transferstation zumindest ein fahrerloses Transportfahrzeug aufweist, mittels welchem der Zwischenspeicher (100) in das Transfermodul (200) hinein und wieder herausbewegt wird.

4. Transferstation nach einem der vorangehenden Ansprüche, wobei der Zwischenspeicher (100) und/oder das Transfermodul (200) eine Zentriervorrichtung (203) zum Zentrieren des Zwischenspeichers (100) im Aufnahmebereich (A) zum Einnehmen der Transferposition aufweisen.

5. Transferstation nach Anspruch 4, wobei die Zentriervorrichtung (203) eine erste Zentriereinheit (106, 206) aufweist, welche dazu eingerichtet ist, einen vorgesehenen Abstand zwischen der Führungsschiene (101) des Zwischenspeichers (100) und dem Führungsschienenabschnitt (201) des Transfermoduls (200) einzustellen, und/oder eine zweite Zentriereinheit (107, 207) aufweist, welche dazu eingerichtet ist, die Führungsschiene (101) des Zwischenspeichers (100) und den Führungsschienenabschnitt (201) des Transfermoduls (200) in einer Taschenförderrichtung (X) fluchtend auszurichten.

6. Transferstation nach einem der vorangehenden Ansprüche, wobei die Bewegungsrichtung (Y) des Zwischenspeichers (100) in den bzw. aus dem Aufnahmebereich (A) im Wesentlichen senkrecht zur Taschenförderrichtung (X) entlang des Führungsprofils (101) bzw. dem Führungsprofilabschnitt (201) ist.

7. Transferstation nach einem der vorangehenden Ansprüche, wobei der Aufnahmebereich (A) von gegenüberliegenden Seiten des Transfermoduls (200) zugänglich ist, so dass der Zwischenspeicher (100) an einer ersten Seite des Aufnahmebereichs (A) in diesen hineinbewegt und an der gegenüberliegenden zweiten Seite des Aufnahmebereichs (A) aus diesem herausbewegt werden kann.

8. Transferstation nach einem der vorangehenden Ansprüche, wobei der Zwischenspeicher (100) eine Aufnahmeseite (102) zum Aufnehmen von Transporttaschen (10) und eine gegenüberliegende Abgabeseite (103) zum Abgeben der Transporttaschen (10) aufweist, zwischen welchen sich die Führungsschiene (100) erstreckt, und das Transfermodul (200) entsprechend einen ersten und einen gegenüberliegenden Führungsschienenabschnitt (201) aufweist, wobei in der Transferposition eine erste mechanische Schnittstelle zwischen der Aufnahmeseite (102) und dem ersten Führungsschienenabschnitt (201) und eine zweite mechanische Schnittstelle zwischen der Abgabeseite (103) und dem zweiten Führungsschienenabschnitt (201) ausgebildet sind, wobei über die erste mechanische Schnittstelle Transporttaschen (10) vom Transfermodul (200) an den Zwischenspeicher (100) übergeben und über die zweite mechanische Schnittstelle Transporttaschen (10) vom Zwischenspeicher (100) an das Transfermodul (200) abgegeben werden können.

9. Transferstation nach Anspruch 8, wobei an der ersten mechanischen Schnittstelle ein erster Versatz (V) zwischen dem ersten Führungsschienenabschnitt (201) und dem aufnahmeseitigen Führungsprofil (101) vorgesehen ist und/oder an der zweiten mechanischen Schnittstelle ein zweiter Versatz (V) zwischen dem abgabeseitigen Führungsprofil (101) und dem zweiten Führungsschienenabschnitt (201) vorgesehen ist, wobei die Transporttaschen (10) am ersten und/oder zweiten Versatz (V) in Förderrichtung (X) jeweils eine dem Versatz (V) entsprechende vertikale Distanz abwärts überwinden.

10. Transferstation nach einem der vorangehenden Ansprüche, wobei an der zumindest einen Transferseite (102, 103) des Zwischenspeichers (100) eine Verriegelungsmechanik (103) vorgesehen ist, welche zwischen einer Verriegelungsposition, in welcher die Transporttaschen (10) am Verlassen des Zwischenspeichers (100) gehindert sind, und einer Freigabeposition, in welcher die Transporttaschen (10) den Zwischenspeicher (100) verlassen können, verstellbar ist.

11. Transferstation nach einem der vorangehenden Ansprüche, wobei der Zwischenspeicher (100) oder das Transfermodul (200) einen Antrieb (209) aufweisen, mittels welchem die Transporttaschen (10) von der Führungsschiene (101) des Zwischenspeichers (100) auf den Führungsschienenabschnitt (201) des Transfermoduls (200) oder umgekehrt überführt werden können.

12. Transferstation nach einem der Ansprüche 8 bis 11, wobei das Transfermodul (200) eine der Aufnahmeseite (102) des Zwischenspeichers (100) vorgelagerte Vereinzelungsvorrichtung (230) zum vereinzelten Abgeben von Transporttaschen (10) aufweist.

13. Verfahren zum Be- und/oder Entladen eines Taschensorters mit Transporttaschen (10), insbesondere unter Verwendung einer Transferstation nach einem der Ansprüche 1 bis 12, aufweisend die Schritte:
Positionieren eines an einer Führungsschiene (101) eine erste Mehrzahl Transporttaschen (10) aufweisenden mobilen Zwischenspeichers (100) zum Speichern und An- und Abfördern von Transporttaschen (10) in einen Aufnahmebereich (A) eines Transfermoduls (200),
Überführen des mobilen Zwischenspeichers (100) in eine Transferposition durch mechanisches Verbinden zumindest einer Transferseite (102, 103) der Führungsschiene (101) des mobilen Zwischenspeichers (100) mit zumindest einem in den Aufnahmebereich (A) mündenden Führungsschienenabschnitt (201) des Transfermoduls (200);
Übergeben der ersten Mehrzahl Transporttaschen (10) von dem mobilen Zwischenspeicher (100) an das Transfermodul (200) zum Transferieren der Transporttaschen (10) an einen Taschensorter.

14. Verfahren nach Anspruch 13, ferner aufweisend den Schritt:
Übergeben einer zweiten Mehrzahl Transporttaschen (10) vom Transfermodul (200) an den Zwischenspeicher (100), nach dem die erste Mehrzahl Transporttaschen (10) von dem Zwischenspeicher (10) an das Transfermodul (200) übergeben wurde.

15. Verfahren nach einem der Ansprüche 13 oder 14, wobei das Positionieren des Zwischenspeichers (100) in den Aufnahmebereich (A) des Transfermoduls (200) von einer ersten Seite des Transfermoduls (200) aus erfolgt, wobei das Verfahren ferner den Schritt aufweist:
Bewegen des Zwischenspeichers (100) aus dem Aufnahmebereich (A) heraus über eine zweite Seite des Transfermoduls (200), wobei die zweite Seite von der ersten Seite abweicht, beispielsweise der ersten Seite gegenüberliegt.

16. Verfahren zum Kommissionieren von Einzelartikeln, mit den Schritten:
Erstellen mindestens eines Auftragsbatches jeweils aufweisend mindestens zwei Artikel / zwei Taschen basierend auf einer Auftragsliste mithilfe einer Steuereinheit;
Übergeben der mindestens zwei Artikel / der mindestens zwei Taschen an einen Taschensorter;
Sortieren und Sequenzieren der mindestens zwei Artikel / der mindestens zwei Taschen des Auftragsbatches in dem Taschensorter;
Fördern des mindestens einen sequenzierten Auftragsbatches zu einer Transferstation gemäß einem der Ansprüche 1 bis 12 und Übergeben des mindestens einen Auftragsbatches an einen in der Transferstation positionierten mobilen Zwischenspeicher.

17. Verfahren nach Anspruch 16, ferner aufweisend die Schritte:
Abtransport des Zwischenspeichers zu einem Packplatz oder einem Zwischenpuffer;
Rückführung des Zwischenspeichers zu der Transferstation.

18. Verfahren nach einem der Ansprüche 16 oder 17, bei welchem eine Mehrzahl Zwischenspeicher vorgesehen ist, und zumindest ein Zwischenspeicher vor Bearbeitung in einer Transferstation vor dieser wartet, bis das Transfermodul frei wird.

19. Verfahren nach einem der Ansprüche 16 bis 18, wobei die Transferstation bzw. der mobile Zwischenspeicher gemäß einem der Ansprüche 1 bis 12 ausgebildet ist.
